# EUROPÄISCHE PATENTSCHRIFT

(11) **EP 1 756 169 B1**
(45) Veröffentlichungstag und Bekanntmachung des Hinweises auf die Patenterteilung: **11.11.2009**
(21) Anmeldenummer: 05750713.9
(22) Anmeldetag: 02.06.2005
(51) Int. Cl.: C08F 2/32

(54) **VERFAHREN ZUM MARKIEREN VON MATERIALIEN**
METHOD FOR MARKING MATERIALS
PROCEDE DE MARQUAGE DE MATERIAUX

(30) Priorität: 04.06.2004 DE 102004027416; 27.04.2005 DE 102005019980
(43) Veröffentlichungstag der Anmeldung: 28.02.2007
(73) Patentinhaber: BASF SE, 67056 Ludwigshafen (DE)
(72) Erfinder: CHAMP, Simon, 67063 Ludwigshafen (DE); BEHRENS, Sven Holger, 68159 Mannheim (DE); GOEDEL, Werner A., 89081 Ulm (DE); RANE, Mahendra, 67063 Ludwigshafen (DE); NGAI, To, 67061 Ludwigshafen (DE); NORD, Simon, 67354 Römerberg (DE)
(86) Internationale Anmeldenummer: PCT/EP2005/005924
(87) Internationale Veröffentlichungsnummer: WO 2005/118650

(56) Entgegenhaltungen:
- EP-A- 0 314 825
- WO-A-96/10589
- WO-A-03/052025
- WO-A-2004/094511
- CH-A- 557 860
- US-A- 3 507 850
- US-A- 4 059 552
- US-A- 4 739 009
- US-A- 5 770 216
- US-B1- 6 686 980
- PATENT ABSTRACTS OF JAPAN Bd. 2000, Nr. 07, 29. September 2000 (2000-09-29) & JP 2000 095960 A (ASAHI DENKA KOGYO KK), 4. April 2000 (2000-04-04)

## Beschreibung

Die Erfindung betrifft ein Verfahren zum Markieren von Materialien mit kodierten Mikropartikeln.

Aus der US-A-3,772,099 ist die Kodierung von Explosivstoffen mit Hilfe eines anorganischen Leuchtstoffes bekannt, wobei man beispielsweise einen feinteiligen, kommerziellen Leuchtstoff und einen feinteiligen, mit mindestens einem Element der Lanthanidengruppe des Periodischen Systems dotierten Leuchtstoff mit einer wässrigen Kaliumsilikatlösung mischt, die Mischung trocknet, mahlt und siebt. Die Teilchengröße des so gebildeten Konglomerats beträgt 0,5 bis 0,7 mm, während die Teilchengröße der Leuchtstoffe in dem Bereich von 6 bis 8 µm liegt. Ein solches Konglomerat kann beispielsweise während der Herstellung von Dynamit vorsichtig mit dem Sprengstoff gemischt werden. Bereits Mengen von 0,01 Gew.-% reichen für eine Markierung eines Explosivstoffs. Die so markierten Explosivstoffe können - auch nach einer Detonation an Hand von eingesammelten Proben - mit Hilfe der Emissionslinien identifiziert werden, die die kodierten Leuchtstoffe beispielsweise beim Bestrahlen mit ultraviolettem Licht aussenden. Aufgrund unterschiedlicher Dotierung von Leuchtstoffen gibt es eine große Anzahl von Kombinationsmöglichkeiten, so dass man den Hersteller, das Jahr, den Monat und die Woche der Herstellung eines in geeigneter Weise mit mehreren dotierten Leuchtstoffen markierten Sprengstoffs ermitteln kann.

Aus der US-A-4,390,452 sind kodierte Mikropartikel für die retrospektive Identifizierung von Substanzen bekannt, die solche Mikropartikel enthalten. Die kodierten Mikropartikel werden erhalten, indem man nacheinander gemäß der Lehre der DE-A-26 51 528 auf einer Trägerfolie visuell unterscheidbare Farbschichten aufbringt, dann auf der Oberfläche des Verbundes mit Hilfe eines Diazotierungsprozesses eine sehr dünne Schicht herstellt, in der durch Bestrahlen mit UV-Licht, das durch ein Mikrodaten enthaltendes Positiv auf diese Schicht trifft, nach Entwicklung Zahlen und Symbole enthalten sind, die mikroskopisch ausgewertet werden können. Aus der Beschichtung werden Mikropartikel hergestellt, die nicht größer als 1000 µm sind und die zwei flache, parallel verlaufende Flächen haben, die die aufgebrachten Zahlen und Symbole enthalten. Die Mikropartikel werden zum Markieren von Substanzen z.B. Sprengstoffen, verwendet, um retrospektiv am Produkt die Herkunft und Produktionsdaten zu erkennen.

Die WO-A-03/044276 betrifft ein Sicherheitspapier und Sicherheitsartikel mit mindestens einem Sicherungselement auf Basis mindestens eines photolumineszierenden Segments, das zumindest teilweise in einem Papierprodukt eingelagert ist, das zu 30 bis 99 Gew.-% aus trockenen Fasern und zu 70 bis 1 Gew.-% aus Füllstoff besteht. Das Sicherungselement kann beispielsweise durch Färben eines Trägers aus Cellulosefasern mit einem Photolumineszenzfarbstoff hergestellt werden. Die Photolumineszenz wird sichtbar, wenn man das Sicherungselement mit Licht einer Wellenlänge von 200 bis 500 nm bestrahlt.

Aus der WO-A-03/052025 sind Nanopartikel enthaltende Druckfarben für Tintenstrahldrucker oder Piezodrucker bekannt. Die Nanopartikel haben einen Durchmesser von 1 bis 1000 nm und weisen eine Kristallstruktur auf. Sie bestehen im Wesentlichen aus einem dotierten Metallsalz z.B. Nanopartikel aus YVO₄ dotiert mit Euridium oder LaPO₄ dotiert mit Cer. Die Nanopartikel können auch mit mehreren Elementen dotiert sein z.B. LaPO₄ dotiert mit Cer und Terbium. Mit solchen Drucktinten können beispielsweise Banknoten, die damit bedruckt wurden, fälschungssicherer gemacht werden.

Aus der WO-A-02/46528 ist bekannt, eine der Sicherheit dienende Markierung auf einem Substrat wie Papier, Keramik oder Polymer, als Beschichtung aufzubringen, wobei der Binder des Beschichtungsmittels fluoreszierende Mikropartikel eines Durchmessers von 0,2 bis 2 µm und davon optisch unterscheidbare diskrete Teilchen eines Durchmessers von 10 bis 20 µm enthält. Die Beschichtung erscheint bei Betrachtung mit dem bloßen Auge farblich einheitlich, jedoch sind bei starker Vergrößerung die diskreten Teilchen von den Teilchen mit einem Durchmesser von 0,2 bis 2 µm farblich zu unterscheiden.

Aus der US-B-6,620,360 ist ein Verfahren zur Herstellung von mehrschichtigen Mikroteilchen zum Markieren und zum späteren Identifizieren von Substanzen bekannt, die diese Mikroteilchen enthalten. Die Mikroteilchen werden hergestellt, indem man nacheinander mehrere dünne und visuell unterschiedliche Markierungsschichten auf einem flächigen Substrat aufbringt, wobei die Dicke einer Markierungsschicht nach dem Festwerden der Schicht weniger als 4,5 µm bis zu 1 µm beträgt, bevor die nächste Schicht aufgetragen wird. Dann entfernt man das flächige Substrat und zerkleinert den Verbund von Markierungsschichten zu einem Pulver.

Aus der US-B-6,455,157 ist bekannt, mindestens zwei verschiedene Gruppen von Mikropartikeln zum Markieren von Produkten zu verwenden, wobei jedes Mikroteilchen einer Gruppe mehrere Farbschichten enthält, die einen Code bilden. Mit Hilfe dieser Mikroteilchen ist eine hierarchische Codierung von Produkten möglich, so dass man beispielsweise an den markierten Produkten den Hersteller und die Produktnummer erkennen kann.

B.J. Battersby, G.A. Lawrie,A.P.R. Johnston und M. Trau berichten in Chem. Commun., 2002, 1435 -1441 über optische Kodierung von kolloidalen Suspensionen mit Fluoreszenzfarbstoffen, Nanokristallen und Metallen. So wurden beispielsweise Kolloide mit einem Durchmesser von 3 bis 6 µm durch Einlagerung von Fluoreszenzfarbstoffen oder von komplex gebundenen Lanthaniden optisch markiert. Eine andere Art der Markierung von Kolloiden besteht in der Einlagerung von Zinksulfid, das mit Cadmium-Selenid-Nanokristallen versehen ist oder in der elektrochemischen Ablagerung von Metallionen in Hohlräumen von Kolloiden. Die Kolloide können beispielsweise mit Hilfe eines Fluoreszenzmikroskops oder eines Cytometers voneinander unterschieden werden.

Der vorliegenden Erfindung liegt die Aufgabe zugrunde, weitere Markierungen für Materialien zur Verfügung zu stellen.

Die Aufgabe wird erfindungsgemäß gelöst mit einem Verfahren zum Markieren von Materialien mit kodierten Mikropartikeln, wenn man kodierte Mikropartikel einsetzt, die erhältlich sind durch
(i) Polymerisieren mindestens eines wasserlöslichen monoethylenisch ungesättigten Monomeren in Gegenwart mindestens eines ethylenisch ungesättigten Monomeren mit mindestens zwei Doppelbindungen im Molekül durch umgekehrte Wasser-in-Öl-Suspensions-Polymerisation, wobei man als Suspensionsmittel dotierte Nanopartikeln einsetzt,
(ii) Emulsionspolymerisation von wasserunlöslichen monoethylenisch ungesättigten Monomeren mit 0 bis 10 Gew.-%, bezogen auf die Monomermischung, mindestens eines ethylenisch ungesättigten Monomeren mit mindestens zwei Doppelbindungen im Molekül, wobei man als Emulgator zur Stabilisierung der dispersen Phase dotierte Nanopartikeln einsetzt,
(iii) Polymerisieren mindestens eines ethylenisch ungesättigten Monomeren zusammen mit einem copolymerisierbaren Farbstoff, der eine ethylenisch ungesättigte Doppelbindung aufweist, und gegebenenfalls Agglomerieren dieser Teilchen oder
(iv) Agglomerieren von mindestens zwei unterschiedlichen Gruppen von Mikropatikeln, die sich durch ihre Absorption, Emission und/oder Streuung von elektromagnetischer Strahlung unterscheiden, zu Aggregaten mit einem mittleren Teilchendurchmesser von 300 nm bis 500 µm.

Bei der Polymerisation gemäß (i) und (ii) werden beispielsweise Nanopartikel einsetzt, die mindestens mit einem Farbstoff, einer Verbindung aus der Gruppe der Seltenen Erden des Periodischen Systems oder die radioaktiv dotiert sind.

Der mittlere Teilchendurchmesser der Polymerteilchen, die durch Polymerisieren gemäß (i) erhältlich sind, beträgt beispielsweise 0,1 µm bis 1000 µm, vorzugsweise 0,5 µm bis 50 µm. Meistens liegt der mittlere Teilchendurchmesser der nach (i) hergestellten Mikropartikeln in dem Bereich von 1 µm bis 20 µm. Die Herstellung von teilchenförmigen Polymeren nach dem Verfahren der umgekehrten Wasser-in-Öl-Suspensions-Polymerisation (USP), wobei man als Suspensionsmittel Nanopartikeln einsetzt, ist beispielsweise aus der US-A-2,982,749, Spalte 1, Zeile 21 bis Spalte 6, Zeile 34 bekannt. Beispiele für solche Suspensionsmittel, die eine niedrige hydrophile-lipophile Balance (d.h. HLB-Wert kleiner 7, vorzugsweise kleiner 4) haben, sind mit Silanen umgesetzte feinteilige Kieselsäuren (silanized silica), Bentonite oder Tone, die jeweils mit quaternären Ammoniumverbindungen behandelt worden sind sowie organische Nanopartikel wie teilweise sulfoniertes Polyvinyltoluol oder mit Dimethylamin umgesetzte Polymere von Chlorvinyltoluol. Zur Definition des HLB-Wertes wird auf W.C. Griffin, Journal of Society of Cosmetic Chemist, Band 1, 311 (1950), hingewiesen.

Weitere Nanoteilchen, die als Suspensionsmittel in Betracht kommen, sind CaCO₃, BaSO₄, Bariumtitanat, SiO₂, Oxide, Sulfide, Phosphate und Pyrophosphate von Erdalkali- und Übergangsmetallen, insbesondere Zinkoxid, Titandioxid, Eisenoxid (Goethit, Hämatit), Eisensulfid und Bariumpyrophosphat, fernerPolymerteilchen, beispielsweise aus Polystyrol oder Polyacrylaten, sowie Mischungen aus zwei oder mehreren Nanoteilchen beispielsweise Mischungen aus Zinkoxid und Titandioxid. Der mittlere Teilchendurchmesser der Nanoteilchen beträgt beispielsweise 5 bis 500 nm und liegt meistens in dem Bereich von 20 bis 300 nm.

Eine Übersicht über die Stabilisierung von Emulsionen mit kolloidalen Partikeln und weitere Suspensionsmittel für die USP findet man bei R. Aveyard, B.P. Binks und J.H. Clint, Advances in Colloid and Interface Science, Band 100-102, Seiten 503 -546 (2003). Außerdem wird auf die Publikation von E. Vignati und R. Piazza, Langmuir, Vol. 19, No. 17, 6650-6656 (2003) über Pickering Emulsionen hingewiesen. Die Nanopartikel, die bei der USP zur Herstellung der erfindungsgemäß zu verwendenden Mikropartikeln eingesetzt werden, werden vor der Polymerisation mit einem Farbstoff, vorzugsweise mit einem Fluoreszenzfarbstoff, einem Element oder einer Verbindung der Seltenen Erden des Periodischen Systems oder mit einer radiaktiven Verbindung bzw. mit einem radioaktiven Element dotiert. Hierfür sind bereits sehr geringe Mengen ausreichend, so dass eine Identifizierung der dotierten Teilchen mit Hilfe der Bestimmung der Absorption, Emission oder Streuung von elektromagnetischer Strahlung möglich ist. Bevorzugt werden dabei Nanopartikel, die mit mindestens einem Fluoreszenzfarbstoff dotiert sind, z.B. Nanopartikel aus Polystyrol mit einem mittleren Teilchendurchmesser von 20 bis 300 nm und einem Fluoreszenzfarbstoff, Nanopartikel aus Silica mit einem mittleren Teilchendurchmesser von 20 bis 100 nm und mindestens einem Fluoreszenzfarbstoff. Außerdem kommen für die USP Silicateilchen mit dem genannten Durchmesser zur Stabilisierung der Emulsion in Betracht, die mit Lanthan und /oder Terbium und/oder Cer dotiert sind.

Beispiele für Farbstoffe, die erfindungsgemäß verwendet werden können, sind

**(a) wasserunlösliche Farbstoffe:**

| | |
|---|---|
| Fluorol 7GA | Lambdachrome No. 5550 (Lambda Chrom Laser Dyes von Lambda Physik GmbH, Hans-Böckler-Str. 12, Göttingen) |
| Coumarin 47 | CAS Reg. No. 99-44-1 |
| Coumarin 102 | CAS Reg. No. 41267-76-9 |
| Coumarin 6H | CAS Reg. No. 58336-35-9 |
| Coumarin 30 | CAS Reg. No. 41044-12-6 |
| Fluorescein 27 | CAS Reg. No. 76-54-0 |
| Uranin | CAS Reg. No. 518-47-8 |
| Bis-MSB | CAS Reg. No. 13280-61-0 |
| DCM | CAS Reg. No. 51325-91-8 |
| Cresyl Violet | CAS Reg. No. 41830-80-2 |
| Phenoxazon 9 | CAS Reg. No. 7385-67-3 |
| HITCI | CAS Reg. No. 19764-96-6 |
| I R 125 | CAS Reg. No. 3599-32-4 |
| I R 144 | CAS Reg. No. 54849-69-3 |
| HDITCI | CAS Reg. No. 23178-67-8 |
| Carbostyryl 7 | Lambdachrome® No. 4220 (Lambda Physik GmbH) |
| Carbostyryl 3 | Lambdachrome No. 4350 (Lambda Physik GmbH) |

**(b) wasserlösliche Farbstoffe**

| | |
|---|---|
| Rhodamine B | CAS Reg. No. 81-88-9 |
| Rhodamine 101 | CAS Reg. No. 64339-18-0 |
| Rhodamine 6G | CAS Reg. No. 989-38-8 |
| Brillantsulfaflavin | CAS Reg. No. 2391-30-2 |
| Rhodamine 19 | CAS Reg. No. 62669-66-3 |
| Rhodamine 110 | CAS Reg. No. 13558-31-1 |
| Sulforhodamine B | CAS Reg. 2609-88-3 |
| Nile Blue | CAS Reg. 53340-16-2 |
| Oxazine | CAS Reg. 62669-60-7 |
| Oxazine 1 | CAS Reg. No. 24796-94-9 |
| HIDCI | CAS Reg. No. 36536-22-8 |
| Cryptocyanine | CAS Reg. No. 4727-50-8 |
| Furan 1 | Lambdachrome ® No. 4260 (Lambda Physik GmbH) |
| Stilbene 3 | Lambdachrome ® No. 4200 (Lambda Physik GmbH) |
| DASBTI | Lambdachrome ® No. 5280 (Lambda Physik GmbH) |

**c) Reaktivfarbstoffe**

| | |
|---|---|
| DACITC* | CAS reg. No. 74802-04-3 |
| DMACA, SE* | CAS Reg. No. 96686-59-8 |
| 5-FAM, SE* | CAS Reg. No. 92557-80-7 |
| FITC 'Isomer I'* | CAS Reg. No. 3326-32-7 |
| 5-TRITC; G isomer* | CAS Reg. No. 80724-19-2 |

| | |
|---|---|
| *) diese Farbstoffe reagieren beispielsweise mit NH-Gruppen | |

Um nach dem Verfahren der USP praktisch wasserunlösliche Polymerteilchen (die Löslichkeit der Polymeren in Wasser beträgt < 1 g/l, vorzugsweise < 0,1 g/l bei 20 °C) herzustellen, werden gemäß (i) wasserlösliche monoethylenisch ungesättigte Monomere zusammen mit Monomeren copolymerisiert, die mindestens zwei Doppelbindungen im Molekül aufweisen. Beispiele für wasserlösliche Monomere sind ethylenisch ungesättigte C₃- bis C₆-Carbonsäuren wie Acrylsäure, Methacrylsäure, Crotonsäure, Maleinsäure, Itaconsäure, Vinylmilchsäure und Ethacrylsäure, sowie Acrylamido-2-methylpropansulfonsäure, Vinylsulfonsäure, Styrolsulfonsäure, Vinyltoluolsulfonsäure und Vinylphosphonsäure. Die ethylenisch ungesättigten Säuren können auch in partiell oder vollständig mit Alkalimetall- oder Erdalkalimetallbasen oder mit Ammoniak oder Ammoniumverbindungen neutralisierter Form eingesetzt werden. Vorzugsweise verwendet man als Neutralisationsmittel Natronlauge, Kalilauge oder Ammoniak. Weitere geeignete wasserlösliche Monomere sind Acrylamid und Methacrylamid. Die Monomeren können allein oder auch in Mischung untereinander sowie zusammen mit bis zu 20 Gew.-% an wasserunlöslichen Monomeren wie Acrylnitril, Methacrylnitril oder Acryl- und Methacrylsäureestern eingesetzt werden.

Beispiele für die bei der USP als Vernetzer eingesetzten Monomeren mit mindestens zwei Doppelbindungen sind N,N'-Methylenbisacrylamid, Divinylbenzol, Divinyldioxan, Acrylsäureester und Methacrylsäureester von mindestens zweiwertigen Alkoholen wie Ethylenglykol, Propylenglykol, Butylenglykol, Hexandiol, Glycerin, Pentaerythrit und Sorbit sowie Polyalkylenglykole mit Molmassen M_{N} von 100 bis 3000, insbesondere Polyethylenglykol und Copolymere aus Ethylenoxid und Propylenoxid. Bevorzugt eingesetzte Vernetzer sind Butandiol-1,4-diacrylat, Butandiol-1,4-dimethacrylat, Hexandio-1,6-diacrylat, Hexandiol-1,6-dimethacrylat, Di- und Triallylether von Petaerythrit oder Sorbitantriallylether. Die Vernetzer werden bei der USP beispielsweise in einer Menge von 0,01 bis 10 Gew.-, vorzugsweise 0,5 bis 5 Gew.-%, bezogen auf die insgesamt eingesetzten Monomeren, verwendet. Es ist selbstverständlich möglich, bei der Polymerisation zwei oder mehrere Vernetzer zu verwenden.

Bei der USP werden die vorzugsweise mit einem Farbstoff dotierten Nanopartikeln beispielsweise in einer Menge von 0,01 bis 20 Gew.-%, vorzugsweise 0,1 bis 5 Gew.-% als Stabilisator für die Emulsion eingesetzt. Die bei der Polymerisation entstehenden Mikropartikel enthalten die dotierten Nanopartikeln vorzugsweise auf der Oberfläche. Die Mikropartikel können aus der Suspension isoliert werden, z.B. durch Brechen der Suspension oder durch Entfernen der flüchtigen Lösemittel.

Eine andere Methode zur Herstellung von kodierten Mikropartikeln besteht (ii) in der Emulsionspolymerisation von wasserunlöslichen monoethylenisch ungesättigten Monomeren mit 0 bis 10 Gew.-%, bezogen auf die Monomermischung, mindestens eines ethylenisch ungesättigten Monomeren mit mindestens zwei Doppelbindungen im Molekül, wobei man als Emulgator zur Stabilisierung der dispersen Phase ebenfalls dotierte Nanopartikeln in den Mengen einsetzt, die auch bei der USP gemäß (i) verwendet werden. Die dotierten Nanopartikeln findet man in bzw. auf der Oberfläche der entstehenden Emulsionspolymerisate. Verfahren zur Emulsionspolymerisation sind bekannt. Hierbei werden beispielsweise wasserunlösliche Monomere in Gegenwart von Radikale bildenden Initiatoren wie Natriumpersulfat, Wasserstoffperoxid oder Redoxkatalysatoren zu einer feinteiligen Polymerdispersion polymerisiert. Zur Stabilisierung der Emulsion verwendet man üblicherweise Verbindungen mit einem HLB-Wert >7. Solche Verbindungen sind beispielsweise C₁₂- bis C₁₈-Alkohole, die beispielsweise mit 5 bis 50 Mol Ethylenoxid pro Mol Alkohol umgesetzt sind, oder die Alkalisalze von sulfonierten langkettigen (>C₁₂- Alkoholen). Die Emulgatoren werden gegebenenfalls gemäß (ii) eingesetzt. Sofern man sie mitverwendet, beträgt ihre Menge beispielsweise 0,1 bis 10, vorzugsweise 0,5 bis 3 Gew.-%, bezogen auf die zu polymerisierenden Monomeren.

Unter wasserunlöslichen Monomeren sollen dabei solche ethylenisch ungesättigten Verbindungen verstanden werden, die wasserunlösliche Polymerisate bilden. Die Wasserlöslichkeit der wasserunlöslichen Polymeren beträgt beispielweise <1 g/l, meistens < 0,01 g/l. Beispiele für solche Monomere sind Styrol, α-Methylstyrol, Ester der Acrylsäure und Methacrylsäure mit einwertigen C₁- bis C₁₈-Alkoholen, vorzugsweise C₁- bis C₄-Alkoholen, mit C₁- bis C₂₀-Alkylgruppen substituierte Acrylamide und ebenso N-substituierte Methacrylamide wie N-Methylacrylamid, N-Methylmethacrylamid, N-Ethylacrylamid und N-Ethylmethacrylamid.

Die wasserunlöslichen Monomeren können gegebenenfalls mit geringen Mengen an wasserlöslichen Monomeren copolymerisiert werden, wobei die wasserlöslichen Monomeren nur in einer solchen Menge eingesetzt werden, dass die entstehenden Polymeren wasserunlöslich sind. Falls wasserlösliche Monomere zur Modifizierung der wasserunlöslichen Polymerisate verwendet werden, beträgt die bei der Emulsionspolymerisation eingesetzte Menge beispielsweise 0,1 bis 10, vorzugsweise 0,2 bis 5 Gew.-%. Als wasserlösliche Monomere können die oben unter (i) beschriebenen Monomeren wie insbesondere ethylenisch ungesättigte Säuren verwendet werden. Eine Modifizierung der Polymeren kann beispielsweise notwendig sein, um funktionelle Gruppen in das Polymerisat einzuführen, damit es z.B. Folgereaktionen unterworfen werden kann.

In manchen Fällen kann es erforderlich sein, die Löslichkeit der Polymeren in Wasser zu erniedrigen und die Festigkeitseigenschaften des Polymerisats zu erhöhen. Dieses Ziel erreicht man, indem man die Polymerisation der wasserunlöslichen Monomeren in Gegenwart von ethylenisch ungesättigten Monomeren durchführt, die mindestens zwei Doppelbindungen in Molekül enthalten. Solche Monomere, die auch als Vernetzer bezeichnet werden, sind oben unter (i) genannt. Sie werden bei der Emulsionspolymerisation gemäß (ii) in den selben Mengen eingesetzt, wie oben für die USP beschrieben ist. Beispiele für vernetzte Emulsionspolymerisate sind Polystyrole, die mit Divinylbenzol oder Butandioldiacrylat vernetzt sind, sowie mit Pentaerythrittriacrylat und/oder Pentaerythrittetraacrylat vernetzte Acrylsäureester und Methacrylsäureester wie vernetztes Poly(n-butylacrylat) oder vernetztes Poly(methylmethacrylat).

Der mittlere Teilchendurchmesser der Polymeren, die durch Polymerisieren gemäß (ii) erhältlich sind, beträgt beispielsweise 10 nm bis 1000 µm, vorzugsweise 10 nm bis 10 µm. Er liegt meistens in dem Bereich von 500 nm bis 30 µm, insbesondere von 1 µm bis 20 µm. Die gemäß (ii) hergestellten wässrigen Polymerdispersionen enthalten mit Nanoteilchen dotierte Mikropartikel, die in Wasser dispergiert sind. Die dotierten Mikropartikel können aus der wässrigen Polymerdispersion durch Zentrifugieren oder Destabilisieren der Dispersion durch Zusatz von anorganischen Salzen gewonnen werden. Da die Mikropartikel für die meisten Anwendungen in dispergierter Form eingesetzt werden, kommt der Isolierung von Mikropartikeln aus wässrigen Dispersionen nur eine untergeordnete Bedeutung zu.

Kodierte Mikropartikel sind außerdem dadurch erhältlich, dass man gemäß (iii) mindestens ein ethylenisch ungesättigtes Monomer zusammen mit einem copolymerisierbaren Farbstoff, der eine ethylenisch ungesättigte Doppelbindung aufweist, einer radikalischen Polymerisation unterwirft. Beispiele für Farbstoffe, die eine ethylenisch ungesättigte Doppelbindung enthalten, sind 4-(Dicyanovinyl)julolidine (DCVJ) und trans-1-(2'-methoxyvinyl)pyrene. Diese Farbstoffe können beispielsweise bei der umgekehrten Suspensionspolymerisation (i) und der Emulsionspolymerisation (ii) als Comonomere zur Kodierung von Polymerteilchen eingesetzt werden. Besonders in den Fällen, in denen Polymerteilchen mit einem mittleren Teilchendurchmesser von 5 bis 500 nm anfallen, kann es für die Anwendung von kodierten Mikropartikeln von Vorteil sein, die Teilchen zu Aggregaten mit einem mittleren Teilchendurchmesser von beispielsweise 300 nm bis 500 µm zu agglomerieren.

Kodierte Mikropartikel können auch dadurch hergestellt werden, dass man gemäß (iv) mindestens zwei unterschiedlichen Gruppen von Mikropartikeln, die sich durch ihre Absorption, Emission und/oder Streuung von elektromagnetischer Strahlung unterscheiden, zu Aggregaten mit einem mittleren Teilchendurchmesser von 300 nm bis 500 µm, vorzugsweise 400 nm bis 20 µm agglomeriert. So kann man beispielsweise mit einem Fluoreszenzfarbstoff kodierte Silicateilchen eines mittleren Durchmessers von 5 bis 500 nm, bevorzugt 20 - 100 nm, und ein vernetztes Polystyrol, das mit Aminogruppen modifiziert ist (Verwendung von z.B. 0,5 bis 3 Gew.-% Dimethylaminopropylacrylat bei der Polymerisation von Styrol), einen mittleren Teilchendurchmesser von 20 bis 100 nm hat und mit einem der obengenannten Reaktivfarbstoffe, z.B. dem Farbstoff mit der CAS reg. No. 96686-59-8 dotiert ist, zu einem Agglomerat zusammenfügen, das eine mittlere Teilchengröße von beispielsweise 300 nm bis 500 µm, vorzugsweise 400 nm bis 20 µm hat.

Bevorzugt werden kodierte Mikropartikeln, deren Kodierung jeweils mindestens zwei verschiedene Farbstoffe enthält. Um die Anzahl von Informationen zu erhöhen, verwendet man beispielsweise eine Mischung aus zwei Gruppen von kodierten Mikropartikeln, wobei die Mischung eine Gruppe von kodierten Mikropartikeln mit nur einem Fluoreszenzfarbstoff und eine andere Gruppe von kodierten Mikropartikeln zwei davon und voneinander verschiedene Fluoreszenzfarbstoffe enthält.

Die Anzahl der Informationen kann dadurch gesteigert werden, dass man zur Markierung von Materialien eine Mischung aus zwei Gruppen von kodierten Mikropartikeln einsetzt, wobei die Mischung eine Gruppe von kodierten Mikropartikeln mit beispielsweise nur einem Fluoreszenzfarbstoff und eine andere Gruppe von kodierten Mikropartikeln mit zwei voneinander verschiedenen Reaktivfarbstoffen enthält. Außerdem kann man beispielsweise eine Mischung aus zwei Gruppen von kodierten Mikropartikeln einsetzt, wobei die Mischung eine Gruppe A von kodierten Mikropartikeln mit einem Fluoreszenzfarbstoff und eine andere Gruppe B kodierte Mikropartikeln mit drei oder mehreren voneinander verschiedenen und von dem Farbstoff der Gruppe A verschiedenen Fluoreszenzfarbstoff enthält.

Ein weiteres Beispiel für die Markierung von Materialien ist eine Mischung aus zwei Gruppen von kodierten Mikropartikeln A und B, wobei die Mischung eine Gruppe von kodierten Mikropartikeln A mit zwei unterschiedlichen Fluoreszenzfarbstoffen und eine andere Gruppe von kodierten Mikropartikeln B mit zwei davon verschiedenen Fluoreszenzfarbstoffen enthält.

Ein Beispiel für weitere Markierungen ist eine Mischung aus zwei Gruppen von kodierten Mikropartikeln A und B, wobei die Mischung eine Gruppe von kodierten Mikropartikeln A mit zwei unterschiedlichen Fluoreszenzfarbstoffen und eine andere Gruppe von kodierten Mikropartikeln B mit drei oder mehreren davon verschiedenen Fluoreszenzfarbstoffen enthält. Ein weiteres Beispiel ist eine Mischung aus zwei Gruppen von kodierten Mikropartikeln A und B, wobei die Mischung eine Gruppe von kodierten Mikropartikeln A mit drei unterschiedlichen Fluoreszenzfarbstoffen und eine andere Gruppe von kodierten Mikropartikeln B mit drei davon verschiedenen Fluoreszenzfarbstoffen enthält.

Ein anderes Beispiel für eine Kodierung, die fünf verschiedene Gruppen von Mikropartikeln A - E enthält, ist eine Mischung aus
A einer Gruppe von Mikropartikeln mit drei verschiedenen Farbstoffen F1, F2 und F3,
B eine Gruppe von Mikropartikeln mit den Farbstoffen F1 und F2,
C eine Gruppe von Mikropartikeln mit den Farbstoffen F1 und F3,
D eine Gruppe von Mikropartikeln mit den Farbstoffen F4 und F5 und
E eine Gruppe von Mikropartikeln mit dem Farbstoff F4.

Gegenstand der Erfindung ist außerdem die Verwendung von kodierten Mikropartikeln, die erhältlich sind durch
(i) Polymerisieren mindestens eines ethylenisch ungesättigten Monomeren in Gegenwart von Farbstoffen und/oder Nanoteilchen, die gegebenenfalls mit mindestens einem Farbstoff, einem Element der Gruppe der Seltenen Erden des Periodischen Systems oder die radioaktiv dotiert sind, zu Mikropartikeln eines mittleren Teilchendurchmessers von 300 nm bis 500 µm oder
(ii) Agglomerieren von mindestens zwei unterschiedlichen Gruppen von Mikropatikeln, die sich durch ihre Absorption, Emission und/oder Streuung von elektromagnetischer Strahlung unterscheiden, zu Aggregaten mit einem mittleren Teilchendurchmesser von 300 nm bis 500 µm,
wobei immer eine Kombination von mindestens zwei verschiedenen Gruppen von kodierten Mikropartikeln eingesetzt wird, die sich durch ihre Absorption, Emission und/oder Streuung von elektromagnetischer Strahlung unterscheiden, zum Markieren von Materialien.

Besonders bevorzugt werden mit Fluoreszenzfarbstoffen kodierte Mikropartikeln sowie mit Reaktivfarbstoffen kodierte Mikropartikeln eingesetzt. Von Bedeutung sind ferner die mit wasserlöslichen Farbstoffen kodierten Mikropartikeln sowie die mit wasserunlöslichen Farbstoffen kodierten Mikropartikeln.

Die Identifizierung der kodierten Mikropartikeln ist mit Hilfe handelsüblicher Cytometer möglich, die ein Fluoreszenzspektrometer und/oder Photodetektoren mit geeigneten Filtern eingebaut enthalten. Die Identifizierung der kodierten Mikropartikeln erfolgt dabei z.B. durch die Analyse des gesamten Fluoreszenzspektrums oder der emittierten Strahlung einzelner ausgewählter Wellenlängen, wobei auch die Wellenlänge des eingestrahlten, zur Fluoreszenz anregenden Lichtes variiert werden kann. Cytometer, die für die Identifizierung von kodierten Mikropartikeln geeignet sind, werden beispielsweise von Partec GmbH, Otto-Hahn-Str. 32, D-48161, vertrieben.

Die oben beschriebenen kodierten Mikropartikel werden zur Markierung von Materialien verwendet, z.B. für Dispersionen, Beschichtungen, Anstrichfarben, Sprengstoffe, Polymere, Pflanzenschutzmittel, Saatgut, pharmazeutische Erzeugnisse wie Tabletten, Kapseln, Tinkturen oder Wirkstoffe enthaltende Präparationen, kosmetische Erzeugnisse wie Cremes, Lotionen oder Shampoos, Lösungen wie Kraftstoffe und insbesondere Heizöl, Papier, insbesondere Papierverpackungen, Banknoten und Sicherheitspapiere sowie alle Gegenstände, die mit einer Kennzeichnung versehen sind wie Fahrgestellnummern von Kraftfahrzeugen.

Die Erfindung betrifft außerdem Materialien, die zur Markierung kodierte Mikropartikeln enthalten, die erhältlich sind durch
(i) Polymerisieren mindestens eines wasserlöslichen monoethylenisch ungesättigten Monomeren in Gegenwart mindestens eines ethylenisch ungesättigten Monomeren mit mindestens zwei Doppelbindungen im Molekül durch umgekehrte Wasser-in-Öl-Suspensions-Polymerisation, wobei man als Suspensionsmittel dotierte Nanopartikeln einsetzt,
(ii) Emulsionspolymerisation von wasserunlöslichen monoethylenisch ungesättigten Monomeren mit 0 bis 10 Gew.-%, bezogen auf die Monomermischung, mindestens eines ethylenisch ungesättigten Monomeren mit mindestens zwei Doppelbindungen im Molekül, wobei man als Emulgator zur Stabilisierung der dispersen Phase dotierte Nanopartikeln einsetzt,
(iii) Polymerisieren mindestens eines ethylenisch ungesättigten Monomeren zusammen mit einem copolymerisierbaren Farbstoff, der eine ethylenisch ungesättigte Doppelbindung aufweist und gegebenenfalls Agglomerieren dieser Teilchen oder
(iv) Agglomerieren von mindestens zwei unterschiedlichen Gruppen von Mikropatikeln, die sich durch ihre Absorption, Emission und/oder Streuung von elektromagnetischer Strahlung unterscheiden, zu Aggregaten mit einem mittleren Teilchendurchmesser von 300 nm bis 500 µm.

Wenn man zwei Gruppen von Mikropartikeln mit unterschiedlichem Code kombiniert, erhält man ein Mittel, mit dem komplexe bzw. hierarchische Markierungen möglich sind. Diesen Mischungen können vielfältige Informationen entnommen werden, indem man sie beispielsweise mit Hilfe der Fluoreszenzmikroskopie analysiert. Die in den Mischungen enthaltenen Informationen sind aus dem Absorptions-, Emissions- oder Streuspektrum der verschiedenen fluoreszierenden Materialien mit Hilfe der bekannten Methoden abzulesen, die beispielsweise in den zum Stand der Technik angegebenen Literaturstellen beschrieben sind.

So ist es beispielsweise möglich, durch Kombination von verschieden kodierten Mikropartikeln oder durch Verwendung von mehreren fluoreszierenden Stoffen zum Kodieren eines Mikroteilchens eine beträchtliche Anzahl an Informationen zu speichern. Wenn man z.B. die derart kodierten Mikropartikeln einem zu kennzeichnenden Produkt zusetzt, so kann man aus dem Absorptions-, Emissions- oder Streuspektrum einer Probe des markierten Produkts beispielsweise Hersteller, Produktionsort, Datum der Herstellung und Chargennummer erkennen.

Bei der Anwendung als Kodierungsmittel müssen die kodierten Mikropartikel selbstverständlich mit den zu kodierenden Materialien verträglich sein, d.h. es dürfen weder die gewünschten Produkteigenschaften noch die Wiedererkennbarkeit der kodierten Mikropartikeln beeinträchtigt werden.

## Patentansprüche

1. Verfahren zum Markieren von Materialien mit kodierten Mikropartikeln, **dadurch gekennzeichnet, dass** man kodierte Mikropartikel einsetzt, die erhältlich sind durch
(i) Polymerisieren mindestens eines wasserlöslichen monoethylenisch ungesättigten Monomeren in Gegenwart mindestens eines ethylenisch ungesättigten Monomeren mit mindestens zwei Doppelbindungen im Molekül durch umgekehrte Wasser-in-Öl-Suspensions-Polymerisation, wobei man als Suspensionsmittel dotierte Nanopartikeln einsetzt,
(ii) Emulsionspolymerisation von wasserunlöslichen monoethylenisch ungesättigten Monomeren mit 0 bis 10 Gew.-%, bezogen auf die Monomermischung, mindestens eines ethylenisch ungesättigten Monomeren mit mindestens zwei Doppelbindungen im Molekül, wobei man als Emulgator zur Stabilisierung der dispersen Phase dotierte Nanopartikeln einsetzt oder
(iii) Polymerisieren mindestens eines ethylenisch ungesättigten Monomeren zusammen mit einem copolymerisierbaren Farbstoff, der eine ethylenisch ungesättigte Doppelbindung aufweist, und gegebenenfalls Agglomerieren dieser Teilchen.

2. Verfahren nach Anspruch 1, **dadurch gekennzeichnet, dass** man bei der Polymerisation gemäß (i) und (ii) Nanopartikel einsetzt, die mindestens mit einem Farbstoff, einer Verbindung aus der Gruppe der Seltenen Erden des Periodischen Systems oder radioaktiv dotiert sind.

3. Verfahren nach Anspruch 1 oder 2, **dadurch gekennzeichnet, dass** der mittlere Teilchendurchmesser der Polymerteilchen, die durch Polymerisieren gemäß (i) erhältlich sind, 0,1 µm bis 1000 µm beträgt.

4. Verfahren nach einem der Ansprüche 1 bis 3, **dadurch gekennzeichnet, dass** der mittlere Teilchendurchmesser der Polymeren, die durch Polymerisieren gemäß (i) erhältlich sind, 0,5 µm bis 50 µm beträgt.

5. Verfahren nach einem der Ansprüche 1 bis 4, **dadurch gekennzeichnet, dass** der mittlere Teilchendurchmesser der Polymeren, die durch Polymerisieren gemäß (i) erhältlich sind, 1 µm bis 20 µm beträgt.

6. Verfahren nach Anspruch 1 oder 2, **dadurch gekennzeichnet, dass** der mittlere Teilchendurchmesser der Polymeren, die durch Polymerisieren gemäß (ii) erhältlich sind, 10 nm bis 1000 µm, vorzugsweise 10 nm bis 10 µm beträgt.

7. Verfahren nach einem der Ansprüche 1, 2 oder 6, **dadurch gekennzeichnet, dass** der mittlere Teilchendurchmesser der Polymeren, die durch Polymerisieren gemäß (ii) erhältlich sind, 500 nm bis 30 µm beträgt.

8. Verfahren nach einem der Ansprüche 1, 2, 6 oder 7, **dadurch gekennzeichnet, dass** der mittlere Teilchendurchmesser der Polymeren, die durch Polymerisieren gemäß (ii) erhältlich sind, 1 µm bis 20 µm beträgt.

9. Verfahren nach einem der Ansprüche 1 bis 8, **dadurch gekennzeichnet, dass** man als kodierte Mikropartikel mindestens zwei unterschiedliche Gruppen von Mikropartikeln einsetzt, die sich durch ihre Absorption, Emission und/oder Streuung von elektromagnetischer Strahlung unterscheiden.

10. Materialien, die zur Markierung kodierte Mikropartikel enthalten, die erhältlich sind durch
(i) Polymerisieren mindestens eines wasserlöslichen monoethylenisch ungesättigten Monomeren in Gegenwart mindestens eines ethylenisch ungesättigten Monomeren mit mindestens zwei Doppelbindungen im Molekül durch umgekehrte Wasser-in-Öl-Suspensions-Polymerisation, wobei man als Suspensionsmittel dotierte Nanopartikeln einsetzt,
(ii) Emulsionspolymerisation von wasserunlöslichen monoethylenisch ungesättigten Monomeren mit 0 bis 10 Gew.-%, bezogen auf die Monomermischung, mindestens eines ethylenisch ungesättigten Monomeren mit mindestens zwei Doppelbindungen im Molekül, wobei man als Emulgator zur Stabilisierung der dispersen Phase dotierte Nanopartikeln einsetzt oder
(iii) Polymerisieren mindestens eines ethylenisch ungesättigten Monomeren zusammen mit einem copolymerisierbaren Farbstoff, der eine ethylenisch ungesättigte Doppelbindung aufweist und gegebenenfalls Agglomerieren dieser Teilchen.

11. Verwendung von kodierten Mikropartikeln, die erhältlich sind durch
Polymerisieren mindestens eines ethylenisch ungesättigten Monomeren in Gegenwart von Farbstoffen und/oder Nanoteilchen, die gegebenenfalls mit mindestens einem Farbstoff, einem Element der Gruppe der Seltene Erden des Periodischen Systems oder die radioaktiv dotiert sind, zu Mikropartikeln eines mittleren Teilchendurchmessers von 300 nm bis 500 µm.
wobei immer eine Kombination von mindestens zwei verschiedenen Gruppen von kodierten Mikropartikeln eingesetzt wird, die sich durch ihre Absorption, Emission und/oder Streuung von elektromagnetischer Strahlung unterscheiden, zum Markieren von Materialien.

12. Verwendung nach Anspruch 11, **dadurch gekennzeichnet, dass** mit Fluoreszenzfarbstoffen kodierte Mikropartikeln eingesetzt werden.

13. Verwendung nach Anspruch 11, **dadurch gekennzeichnet, dass** mit Reaktivfarbstoffen kodierte Mikropartikeln eingesetzt werden.

14. Verwendung nach Anspruch 11, **dadurch gekennzeichnet, dass** mit wasserlöslichen Farbstoffen kodierte Mikropartikeln eingesetzt werden.

15. Verwendung nach Anspruch 11, **dadurch gekennzeichnet, dass** mit wasserunlöslichen Farbstoffen kodierte Mikropartikeln eingesetzt werden.

## Claims

1. A method for the marking of materials with coded microparticles, wherein coded microparticles which are obtainable by
(i) polymerization of at least one water-soluble monoethylenically unsaturated monomer in the presence of at least one ethylenically unsaturated monomer having at least two double bonds in the molecule by inverse water-in-oil suspension polymerization, doped nanoparticles being used as the suspending medium,
(ii) emulsion polymerization of water-insoluble monoethylenically unsaturated monomers with from 0 to 10% by weight, based on the monomer mixture, of at least one ethylenically unsaturated monomer having at least two double bonds in the molecule, doped nanoparticles being used as an emulsifier for stabilizing the disperse phase, or
(iii) polymerization of at least one ethylenically unsaturated monomer together with a copolymerizable dye which has an ethylenically unsaturated double bond, and, if appropriate, agglomeration of these particles
are used.

2. The method according to claim 1, wherein nanoparticles which are doped at least with a dye or with a compound from the group consisting of the rare earth elements of the Periodic Table or radioactively doped are used in the polymerization according to (i) and (ii).

3. The method according to claim 1 or 2, wherein the mean particle diameter of the polymer particles which are obtainable by polymerization according to (i) is from 0.1 µm to 1000 µm.

4. The method according to any of claims 1 to 3, wherein the mean particle diameter of the polymers which are obtainable by polymerisation according to (i) is from 0.5 µm to 50 µm.

5. The method according to any of claims 1 to 4, wherein the mean particle diameter of the polymers which are obtainable by polymerization according to (i) is from 1 µm to 20 µm.

6. The method according to claim 1 or 2, wherein the mean particle diameter of the polymers which are obtainable by polymerization according to (ii) is from 10 nm to 1000 µm, preferably from 10 nm to 10 µm.

7. The method according to any of claims 1, 2 and 6, wherein the mean particle diameter of the polymers which are obtainable by polymerization according to (ii) is from 500 nm to 30 µm.

8. The method according to any of claims 1, 2, 6 and 7, wherein the mean particle diameter of the polymers which are obtainable by polymerization according to (ii) is from 1 µm to 20 µm.

9. The method according to any of claims 1 to 8, wherein at least two different groups of microparticles which differ in their absorption, emission and/or scattering of electromagnetic radiation are used as the coded microparticles.

10. A material which comprises microparticles coded for marking and is obtainable by
(i) polymerization of at least one water-soluble monoethylenically unsaturated monomer in the presence of at least one ethylenically unsaturated monomer having at least two double bonds in the molecule by inverse water-in-oil suspension polymerization, doped nanoparticles being used as the suspending medium,
(ii) emulsion polymerization of water-insoluble monoethylenically unsaturated monomers with from 0 to 10% by weight, based on the monomer mixture, of at least one ethylenically unsaturated monomer having at least two double bonds in the molecule, doped nanoparticles being used as an emulsifier for stabilizing the disperse phase, or
(iii) polymerization of at least one ethylenically unsaturated monomer together with a copolymerizable dye which has an ethylenically unsaturated double bond, and, if appropriate, agglomeration of these particles.

11. The use of coded microparticles which are obtainable by
polymerization of at least one ethylenically unsaturated monomer in the presence of dyes and/or nanoparticles which, if appropriate, are doped with at least one dye or with an element of the group consisting of the rare earth elements of the Periodic Table or radioactively doped to give microparticles having a mean particle diameter of from 300 nm to 500 µm,
a combination of at least two different groups of coded microparticles which differ in their absorption, emission and/or scattering of electromagnetic radiation always being used for the marking of materials.

12. The use according to claim 11, wherein microparticles coded with fluorescence dyes are used.

13. The use according to claim 11, wherein microparticles coded with reactive dyes are used.

14. The use according to claim 11, wherein microparticles coded with water-soluble dyes are used.

15. The use according to claim 11, wherein microparticles coded with water-insoluble dyes are used.

## Revendications

1. Procédé pour le marquage de matériaux avec des microparticules codées, **caractérisé en ce qu'**on utilise des microparticules codées, qui peuvent être obtenues par
(i) polymérisation d'au moins un monomère éthyléniquement monoinsaturé, soluble dans l'eau en présence d'au moins un monomère éthyléniquement insaturé présentant au moins deux doubles liaisons dans la molécule par une polymérisation en suspension eau-dans-huile inversée, où on utilise comme agent de mise en suspension des nanoparticules dopées,
(ii) polymérisation en émulsion de monomères éthyléniquement monoinsaturés, insolubles dans l'eau, comprenant 0 à 10% en poids, par rapport au mélange de monomères, d'au moins un monomère éthyléniquement insaturé, présentant au moins deux doubles liaisons dans la molécule, où on utilise comme émulsifiant pour la stabilisation de la phase dispersée des nanoparticules dopées ou
(iii) polymérisation d'au moins un monomère éthyléniquement insaturé avec un colorant copolymérisable, qui présente une double liaison éthyléniquement insaturée, et le cas échéant agglomération de ces particules.

2. Procédé selon la revendication 1, **caractérisé en ce qu'**on utilise lors de la polymérisation selon (i) et (ii) des nanoparticules qui sont au moins dopées avec un colorant, un composé du groupe des terres rares du système périodique ou radi-oactivement.

3. Procédé selon la revendication 1 ou 2, **caractérisé en ce que** le diamètre moyen des particules des polymères, qui peuvent être obtenues par polymérisation selon (i), est de 0,1 µm à 1000 µm.

4. Procédé selon l'une quelconque des revendications 1 à 3, **caractérisé en ce que** le diamètre moyen des particules des polymère, qui peuvent être obtenues par polymérisation selon (i), est de 0,5 µm à 50 µm.

5. Procédé selon l'une quelconque des revendications 1 à 4, **caractérisé en ce que** le diamètre moyen des particules des polymères, qui peuvent être obtenues par polymérisation selon (i), est de 1 µm à 20 µm.

6. Procédé selon la revendication 1 ou 2, **caractérisé en ce que** le diamètre moyen des particules des polymères, qui peuvent être obtenues par polymérisation selon (ii), est de 10 nm à 1000 µm, de préférence de 10 nm à 10 µm.

7. Procédé selon l'une quelconque des revendication 1, 2 ou 6, **caractérisé en ce que** le diamètre moyen des particules des polymères, qui peuvent être obtenues par polymérisation selon (ii), est de 500 nm à 30 µm.

8. Procédé selon l'une quelconque des revendications 1, 2, 6 ou 7, **caractérisé en ce que** le diamètre moyen des particules des polymères, qui peuvent être obtenues par polymérisation selon (ii), est de 1 µm à 20 µm.

9. Procédé selon l'une quelconque des revendications 1 à 8, **caractérisé en ce qu'**on utilise comme microparticules codées au moins deux groupes différents de microparticules, qui se distinguent par leur absorption, émission et/ou dispersion de rayonnement électromagnétique.

10. Matériaux, qui conviennent pour le marquage des microparticules codées qui peuvent être obtenues par
(i) polymérisation d'au moins un monomère éthyléniquement monoinsaturé, soluble dans l'eau en présence d'au moins un monomère éthyléniquement insaturé présentant au moins deux doubles liaisons dans la molécule par une polymérisation en suspension eau-dans-huile inversée, où on utilise comme agent de mise en suspension des nanoparticules dopées,
(ii) polymérisation en émulsion de monomères éthyléniquement monoinsaturés, insolubles dans l'eau comprenant 0 à 10% en poids, par rapport au mélange de monomères, d'au moins un monomère éthyléniquement insaturé, présentant au moins deux doubles liaisons dans la molécule, où on utilise comme émulsifiant pour la stabilisation de la phase dispersée des nanoparticules dopées ou
(iii) polymérisation d'au moins un monomère éthyléniquement insaturé avec un colorant copolymérisable, qui présente une double liaison éthyléniquement insaturée, et le cas échéant agglomération de ces particules.

11. Utilisation de microparticules codées, qui peuvent être obtenues par
- polymérisation d'au moins un monomère éthyléniquement insaturé en présence de colorants et/ou de nanoparticules, qui sont le cas échéant dopées avec au moins un colorant, un élément du groupe des terres rares du système périodique ou radioactivement, en microparticules présentant un diamètre moyen des particules de 300 nm à 500 µm,
- où on utilise toujours une combinaison d'au moins deux groupes différents de microparticules codées, qui se distinguent par leur adsorption, leur émission et/ou leur dispersion d'un rayonnement électromagnétique, pour le marquage de matériaux.

12. Utilisation selon la revendication 11, **caractérisée en ce qu'**on utilise des microparticules codées avec des colorants fluorescents.

13. Utilisation selon la revendication 11, **caractérisée en ce qu'**on utilise des microparticules codées avec des colorants réactifs.

14. Utilisation selon la revendication 11, **caractérisée en ce qu'**on utilise des microparticules codées avec des colorants solubles dans l'eau.

15. Utilisation selon à revendication 11, **caractérisée en ce qu'**on utilise des microparticules codées avec des colorants insolubles dans l'eau.
